# EUROPEAN PATENT APPLICATION

(11) **EP 4 700 572 A1**
(43) Date of publication of application: **25.02.2026**
(21) Application number: 24810123.0
(22) Date of filing: 22.04.2024
(51) Int. Cl.: G06F 9/455, H04L 67/10, H04N 5/262, G06T 15/00, H04N 5/265

(54) **CLOUD NATIVE DISTRIBUTED REAL-TIME RENDERING FRAMEWORK, RENDERING METHOD AND DEVICE**

(30) Priority: 23.05.2023 CN 202310584110
(71) Applicant: You San Di Technology (Shanghai) Co., Ltd., Shanghai 201306 (CN)
(72) Inventor: SUN, Zhipeng, Shanghai 201306 (CN); LI, Zhongyuan, Shanghai 201306 (CN); GU, Weiwei, Shanghai 201306 (CN); SHU, Runxuan, Shanghai 201306 (CN); WU, Taibang, Shanghai 201306 (CN)
(74) Representative: Prinz & Partner mbB
(86) International application number: PCT/CN2024/089050
(87) International publication number: WO 2024/239876

(57) **Abstract**

Provided is a cloud native distributed real-time rendering framework. It includes a network topology link establishment module, a traditional interactive real-time 3D framework adaptation layer, an ECS-based distributed development framework, a network synchronization layer, a data transmission layer, and a network transmission layer. Multiple domains of the traditional interactive real-time 3D framework adaptation layer are split into multiple types of service modules, and each type of service module corresponds to one type of distributed node. The network topology link establishment module is configured to establish, according to a data processing flow and differences in data transmission types of multiple types of distributed nodes, TCP, UDP, or RDMA links for the multiple types of distributed nodes. The ECS-based distributed development framework is configured to be compatible with a development system to automatically complete data synchronization. The network synchronization layer is configured to synchronize, according to a computing task rule and a frame rate, input and output data of the multiple types of distributed nodes of the cloud native distributed real-time rendering framework. The network transmission layer is configured to encapsulate, according to data characteristics between different systems and reachability requirements between systems, link modes such as TCP, UDP, or RDMA for selection by an upper layer.

## Description

The present application claims priority to Chinese Patent Application No. 202310584110.6, filed with the China National Intellectual Property Administration (CNIPA) on May. 23, 2023, the disclosure of which is incorporated herein by reference in its entirety.

### TECHNICAL FIELD

The present application relates to the field of computers, for example, a cloud native distributed real-time rendering framework, a cloud native distributed real-time rendering method, and a cloud native distributed real-time rendering device.

### BACKGROUND

The main technologies and products in the field of cloud rendering focus on the development of technologies such as cloud-side rendering, real-time communication (RTC)/real-time system (RTS) streaming. Essentially, they still involve mounting the original client-side application on a single cloud computing instance to achieve the remote desktop experience.

Common real-time streaming big data processing frameworks, such as Spark Streaming, Storm, and Apache Flink, are mostly distributed. However, in terms of processed data types, they mainly handle structured data rather than unstructured data in the real-time 3 dimension (3D) field. Therefore, the processed data is often linked with databases. In addition, in terms of latency, these frameworks need to cooperate with the databases, resulting in an overall data processing latency of hundreds to thousands of milliseconds or more. This fails to satisfy the 60 frames per second (FPS) required for rendering in the real-time 3D field, or the corresponding operational latency of 16 milliseconds or lower.

In addition, traditional distributed rendering is mostly used in the computer graphics (CG) and traditional film and television industries in the form of render farms (available for both cloud-side and on-premises deployment), to perform non-real-time rendering tasks by using distributed clusters.

The most representative game engine framework among traditional interactive real-time 3D rendering frameworks, such as Unity, Unreal, and Cocos, may satisfy a real-time rendering interaction requirement and process unstructured data. However, they lack a cloud native distributed framework and cannot satisfy unlimited elastic scaling of computing power, since traditional interactive real-time 3D rendering frameworks may only utilize the computing power of a single device. The computing power of the single device cannot scale elastically like that of a cloud native distributed system; therefore, only an upper limit of the computing power scheduled by a framework relying on the computing power of the single device may be used. Therefore, the traditional interactive real-time 3D rendering framework is constrained by the upper limit of the computing power of the device. In contrast, a big data real-time streaming processing framework such as Spark Streaming, Storm, and Apache Flink is based on the cloud native distributed framework and supports unlimited elastic scaling of computing power, but it cannot satisfy the real-time rendering interaction requirement or process the unstructured data.

### SUMMARY

The present application provides a cloud native distributed real-time rendering framework. The cloud native distributed real-time rendering framework is used for processing real-time streaming unstructured data and includes a network topology link establishment module, a traditional interactive real-time three-dimensional (3D) framework adaptation layer, an entity-component system (ECS)-based distributed development framework, a network synchronization layer, a data transmission layer, and a network transmission layer. The cloud native distributed real-time rendering framework is configured to provide multiple types of distributed nodes, and the multiple types of distributed nodes include a composition node, a rendering node, a logical node, and a computing node. Multiple domains of the traditional interactive real-time 3D framework adaptation layer are split into multiple types of service modules, and each type of service module of the multiple types of service modules corresponds to one type of distributed node among the multiple types of distributed nodes. The network topology link establishment module is configured to establish, according to a data processing flow and differences in data transmission types of the multiple types of distributed nodes, links such as a transmission control protocol (TCP) link, a user data packet protocol (UDP) link, or a remote direct memory access (RDMA) link for the multiple types of distributed nodes. The ECS-based distributed development framework is configured to be compatible with a development system to automatically complete data synchronization. The network synchronization layer is configured to synchronize, according to a computing task rule and a frame rate, input and output data of the multiple types of distributed nodes of the cloud native distributed real-time rendering framework. The data transmission layer is configured to provide a sending and receiving service for multiple types of data packets. The network transmission layer is configured to encapsulate, according to data characteristics between different systems and reachability requirements between systems, link modes such as a TCP mode, a UDP mode, or an RDMA mode for selection by the network topology link establishment module of an upper layer. The ECS-based distributed development framework is further configured to provide a business logic development framework, and the traditional interactive real-time 3D framework adaptation layer in parallel with the ECS-based distributed development framework is further configured to provide an adaptation capability of a Unity functional module on the ECS-based distributed development framework. When a rendering task that cannot be completed by a single rendering node is processed, the logical node splits the rendering task and assigns split rendering tasks to multiple rendering nodes, so that the multiple rendering nodes jointly complete the split rendering task in a manner of collaborative rendering.

The present application further provides a cloud native distributed real-time rendering method. The cloud native distributed real-time rendering method includes that: in response to an input operation of a user, a logical node performs logical processing to generate a computing task; the computing task is published to a computing node, and the computing node processes a computing task for a current frame; a computing result required for the current frame is returned to the logical node so as to generate a rendering task; the rendering task is published, and a rendering node processes the rendering task; a composition node processes a rendering and composition task; and streaming of a rendered image is performed, so that the user receives a streamed image.

The present application further provides a cloud native distributed real-time rendering device. The cloud native distributed real-time rendering device includes a memory and a processor. The memory is configured to store a software application. The processor is configured to execute the software application, and a program portion of the software application correspondingly performs the cloud native distributed real-time rendering method.

The present application further provides a computer-readable storage medium. The computer-readable storage medium stores a computer program, and the computer program, when executed by a processor, performs the cloud native distributed real-time rendering method.

The present application further provides a cloud native distributed real-time rendering system. The cloud native distributed real-time rendering system includes a logical node service module, a computing node service module, a rendering node processing module, a composition node service module, and a real-time communication (RTC) or real-time system (RTS) service module. The logical node service module is configured to perform logical processing to generate a computing task in response to an input operation of a user and publish the computing task to the computing node service module. The computing node service module is configured to perform a computing task, process a computing task for a current frame and an asynchronous computing task, and return a computing result required for the current frame to the logical node service module after processing the computing task for the current frame. The logical node service module is further configured to generate a rendering task and publish the rendering task to the rendering node processing module. The rendering node processing module is configured to process a rendering task. The composition node service module is configured to process a rendering and composition task to perform a composition of an image. The RTC or RTS service module is configured to perform streaming of a rendered image, so that the user receives a streamed image.

### BRIEF DESCRIPTION OF THE DRAWINGS

FIG. 1 is a schematic structural diagram of a cloud native distributed real-time rendering framework according to an embodiment of the present application;
FIG. 2 is a schematic diagram of an interface of a cloud native distributed real-time rendering framework according to an embodiment of the present application;
FIG. 3 is a diagram showing a link of a network topology result of a cloud native distributed real-time rendering framework according to an embodiment of the present application;
FIG. 4 is a sequence-to-sequence prediction model according to an embodiment of the present application;
FIG. 5 is a timing diagram showing the system running of a cloud native distributed real-time rendering framework according to an embodiment of the present application;
FIG. 6 is a schematic diagram of an overall system delay of a cloud native distributed real-time rendering framework according to an embodiment of the present application;
FIG. 7 is a diagram showing a test scenario of a real-machine project that applies a cloud native distributed real-time rendering framework according to an embodiment of the present application; and
FIG. 8 is a diagram showing a pre-trained model of a cloud native distributed real-time rendering framework according to an embodiment of the present application.

### DETAILED DESCRIPTION

The following description is intended to disclose the present application to enable those skilled in the art to implement the present application. Embodiments in the following description are provided merely as examples.

The term "a" or "an" should be understood to mean "at least one" or "one or more", that is, in one embodiment, the number of elements may be one, and in further embodiments, the number of elements may be multiple.

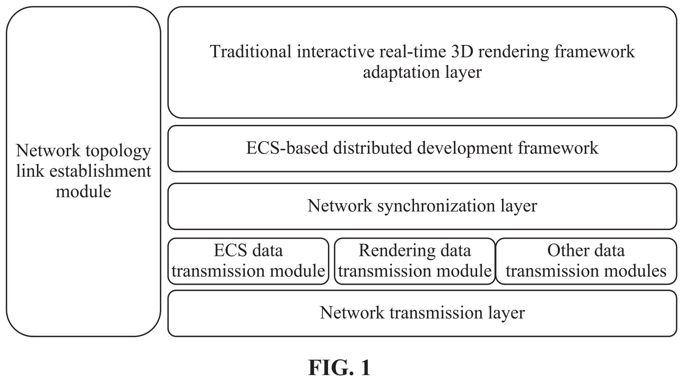

The present application relates to a computer program. As shown in FIG. 1, FIG. 1 is a schematic structural diagram of a cloud native distributed real-time rendering framework according to an embodiment of the present application. The cloud native distributed real-time rendering framework can leverage the elastic scaling of cloud networks and high-availability computing power features. The cloud native distributed real-time rendering framework is specifically designed to process real-time streaming unstructured data and can satisfy the ultra-low latency requirements in the field of interactive real-time 3D, thereby making the experience of the interactive real-time 3D more realistic and immersive, and breaking through the virtual experience limitations of a single computing device.

As shown in FIG. 1, the cloud native distributed real-time rendering framework includes a network topology link establishment module, a traditional interactive real-time 3D framework adaptation layer, an ECS-based distributed development framework, a network synchronization layer, an ECS data transmission module, a rendering data transmission module, other data transmission modules, and a network transmission layer. The network topology link establishment module is configured to establish, according to a data processing flow (for example, a logical world affects a logical input to generate a simulation computing task, a simulation computing result is returned to affect the logical world, the logical world is updated to drive a rendering world to initiate rendering tasks from different viewpoints, and a rendering node completes the rendering task and outputs a rendering result to a composition node to complete the cloud rendering streaming) and differences in data transmission types of multiple types of distributed nodes, links such as a TCP link, a UDP link, or an RDMA link for the multiple types of distributed nodes. The data transmission layer is configured to provide a sending and receiving service for multiple types of data packets. The ECS data transmission module is configured for data transmission between a logical node and a simulation node. The rendering data transmission module is configured for data transmission between the rendering node and the composition node. The other data transmission modules are configured to satisfy the special data communication requirements for non-ECS data types among multiple nodes. The ECS-based distributed development framework is configured to provide a development framework for business logic, and the traditional interactive real-time 3D framework adaptation layer, in parallel with the ECS-based distributed development framework, is configured to provide an adaptation capability of a Unity functional module on the ECS-based distributed development framework.

In this embodiment of the present application, the traditional interactive real-time 3D framework adaptation layer is implemented as a Unity game engine framework. Multiple domains of the traditional interactive real-time 3D framework adaptation layer are split into multiple types of service modules, and each type of service module corresponds to one type of distributed node. These are defined as Systems in the ECS framework, and input and output data of each module is defined as component data of a corresponding entity (Entity-Component) in the ECS. In this embodiment of the present application, the rendering module in Unity is defined as a rendering service system, a post-processing and integrated cloud rendering RTC streaming module in the Unity is defined as a composition service system, a logic processing module in the Unity is defined as a logic service system, and a self-developed real-time cloth simulation module is defined as a computing service system. Here, the real-time cloth simulation module serves as a task processing system of a computing node, and the computing node may use any user-defined computing system as the computing service system. A Unity mounted with a development template component provided in the present application is used, so that executable binary files running on the above four types of service modules (distributed nodes) may be directly compiled.

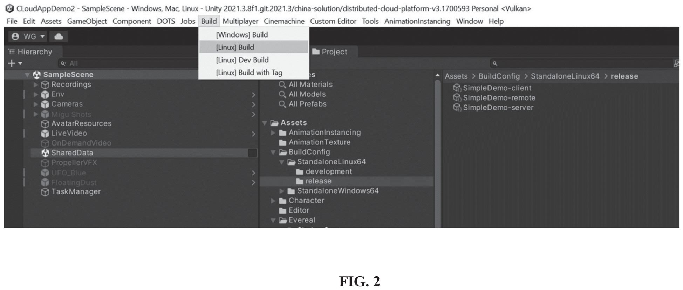

The cloud native distributed real-time rendering framework of the present application supports compiling binary files for Linux and Windows, as shown in FIG. 2. A Client compilation parameter generates binary files for the composition node and rendering node.

The composition node is essentially a special rendering node, and it may independently complete the rendering task when a single rendering node is capable of rendering a scene. Therefore, the composition node and the rendering node share a set of compilation parameters to generate the same binary file, with only differences in startup parameters. Remote generates a binary file for the computing node, and Server generates a binary file for the logical node, where "Server" is a concept in the network architecture and is the only stateful component in the distributed system, which may be defined as a service module. The above compilation processes are triggered uniformly via the Build menu.

The ECS-based distributed development framework of the present application is compatible with the Unity ECS development process, enabling developers to develop interactive experiences for real-time 3D rendering in their familiar original development environment. If the developers need to develop a custom computing system, they only need to use a dedicated application interface (API) for distributed computing, and still define their own computing systems, input/output data, and task execution rules according to the ECS software design approach. The ECS-based distributed development framework may automatically complete data synchronization, as exemplified by a cloth simulation system.

The network synchronization layer of the present application synchronizes input and output data of multiple types of nodes according to a computing task rule and a frame rate. The computing task rule is classified into an asynchronous update mode or a frame rate-based update mode.

The data transmission module of the present application processes three types of data: (1) the component data of the corresponding entity in ECS, which is sent directly through the transmission layer; (2) rendering result data from the rendering node, which is encoded using hardware-supported codec functions before being sent through the transmission layer; a receiving end performs hardware decoding, for example, with support for NVENC codec acceleration on an NV graphics card; and (3) a serialized data block of other complex data structures, which is sent directly through the transmission layer. The data transmission module is configured to use a deep learning model with a bidirectional encoder representation from the transformer (BERT) structure as a backup module when performance jitter occurs in a system module, so that the stability of system performance is enhanced.

The network transmission layer of the present application is optimized for cloud network computer room environments. Based on the data characteristics between different systems and the reachability requirements between systems, the network transmission layer encapsulates three possible link manners in cloud network environments for selection by a network topology link establishment module of an upper layer, that is, a TCP link, a UDP link, and an RDMA link. In embodiments of the present application, a UDP link is used between the computing node and the logical node, a TCP link is used between the logical node and the rendering node, and a TCP link is used between the rendering node and the composition node.

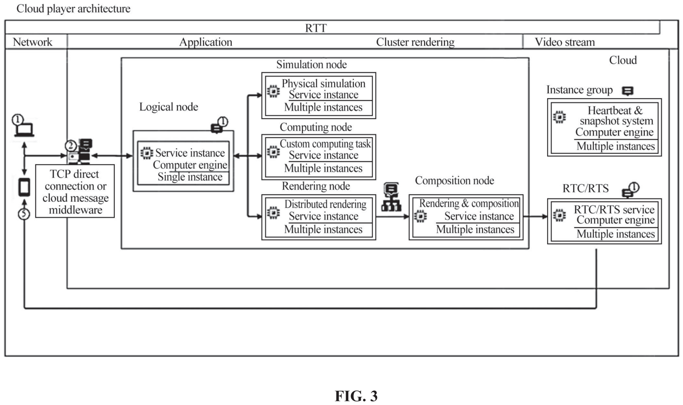

The network topology link establishment module of the present application establishes, according to the network topology defined by the framework, a link between the central processing unit (CPU) or graphics processing unit (GPU) nodes allocated by the cloud platform's Infrastructure as a Service (IaaS) layer in accordance with the network topology result shown in FIG. 3. The composition node and the rendering node use a GPU node, while other nodes use a CPU node.

The distributed node includes the composition node, the rendering node, the logical node, and the computing node. When the rendering node processes the rendering task that cannot be completed by a single node, the logical node splits the rendering task and distributes the split rendering tasks to N rendering nodes, so that the N rendering nodes jointly complete the split rendering task in a manner of collaborative rendering. The rendering node is a stateless node, enabling quick replacement. The cloud native distributed real-time rendering framework of the present application provides collaborative rendering. A Tile-based distributed rendering involves multiple rendering nodes sharing the rendering task; however, mismatches in simulation speeds between the multiple rendering nodes and service module (server) nodes, as well as server fluctuations, lead to inconsistent simulation speeds among nodes participating in the rendering task. These problems result in a low success rate of frame composition. Therefore, a collaborative rendering mechanism based on the central service module node is required to manage and coordinate the workload of the multiple rendering nodes, and a frame interpolation and compensation module based on a Transformer-based deep learning prediction network is used for temporary compensation, thereby improving the success rate of rendering composition.

For the coordination of rendering nodes within a group, when the per-frame rendering time of the rendering nodes within the group is greater than a preset threshold, the fluctuation of the rendering nodes within the group is considered significant. A suitable target update frequency for the group is calculated by comprehensively considering actual update frequencies and historical data of multiple nodes within the group.

Due to differences in workloads among different rendering nodes, the per-frame rendering time fluctuates across different rendering nodes. For example, a rendering node 1 has a heavier workload and takes 10 milliseconds to render one frame, while a rendering node 2 has a lighter workload and takes 5 milliseconds to render one frame. This leads to significant fluctuations between the two rendering nodes and differences in the output time of images. Without any processing, significant fluctuations in rendering nodes will cause screen tearing.

In an embodiment, a target frame rate is set to 30 fps and 60 fps, which correspond to a maximum rendering time of 33 milliseconds and a maximum rendering time of 16 milliseconds, respectively. If the rendering node fails to complete rendering within these two time windows, the final frame output will be unstable. Therefore, the preset threshold may be set to 33 milliseconds and 16 milliseconds.

For the rendering node and the server, a network sending frequency of data states from the service module node to the group is dynamically adjusted based on the target frequency calculated for each group.

For the calculation of a dynamic sending frequency, it is calculated based on the target frequency of the group and a frequency parameter of the server itself to determine whether to send the data state for the group in the current frame.

The splitting manner of the rendering task includes spatial dimension splitting and temporal dimension splitting. These two splitting manners may be used independently or in combination to achieve high performance and a high frame rate experience.

The spatial dimension splitting supports a tile-based manner, which splits the rendering tasks according to the dimensions of the final image. The tile-based division manner may alter the configuration by changing the complexity of the rendering task, such as quadrant division, tripartite division, or bipartite division. This manner is originally a rendering task splitting manner for parallel processors inside GPUs and is mostly used in mobile GPUs in conjunction with the cache. In the present application, the tile-based splitting manner is used in combination with a GPU-driven rendering pipeline. By relying on the GPU-driven rendering pipeline, the rendering task is split in a tile-based manner without relying on the cooperation of the cache, thus enabling applications in distributed network structures through the synchronization of small amounts of data.

For temporal dimension splitting in a distributed real-time rendering system, the rendering task generated by the logical node sends dotting data representing the world change amount at the update frequency of the logical frame rate of the virtual world. The current architecture design allows the rendering node and the logical node to operate at different frame rates. In the cloud native distributed real-time rendering framework of the present application, a prediction model for processing logical result dotting sequence data is integrated into the rendering node, thereby enabling higher and more stable frame rates by using additional GPU computing power. For example, in an embodiment, when the prediction model may predict logical dotting data for 2 frames within a given latency, two rendering nodes may be assigned to render odd-numbered frames and even-numbered frames, respectively, thereby achieving the splitting of computational tasks for the entire system in the temporal dimension. The frame-based distributed rendering technology (splitting the rendering task by frame partitioning, for example, one rendering node handles the odd-numbered frames and another rendering node handles the even-numbered frames) is a technique in the offline rendering field, and is mostly used in video production-related fields such as film and television, and advertising. Since the offline rendering has no real-time interaction, all behaviors in the virtual world are deterministic, thereby allowing easy frame-wise parallel processing. However, in the field of real-time rendering, due to real-time interaction that the entire system responds to directly on the client side, there are neither deterministic future behaviors nor redundant computing power to support future scene rendering. Therefore, this technology cannot be applied in the real-time rendering field. In the cloud native distributed real-time rendering framework of the present application, the temporal dimension splitting is used, and the prediction model for processing the logical result dotting sequence data is integrated into the rendering node, so that the problem of combining the two aspects described above can be effectively solved.

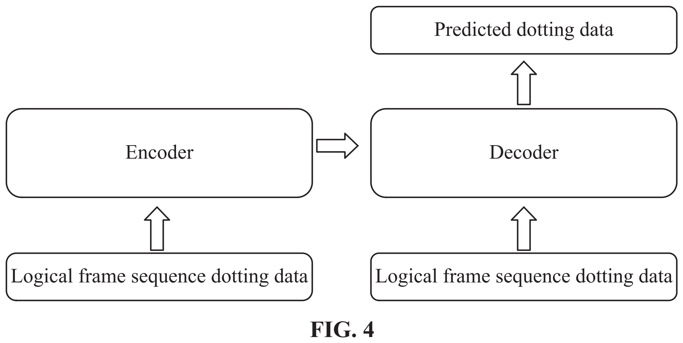

The cloud native distributed real-time rendering framework of the present application provides a logical frame prediction model, and the logical frame prediction model is a pre-trained model trained for a specific virtual world state. As shown in FIG. 4, it is a sequence-to-sequence prediction model for output data from multiple computing nodes, which uses a deep learning module with a Transformer as the basic interface as its backbone network. This model serves as a burst compensation mechanism for scenarios where a single computing node cannot complete the computing task with the expected efficiency due to sudden performance fluctuations. After the development of real-time interaction is completed, a large amount of logical frame-dotting data can be easily obtained. A mask modeling manner is used to train the model, thereby performing end-to-end training for the logical data structure of each virtual world. During runtime, only the decoder needs to be used to accurately predict logical dotting data.

The training manner of the pre-trained model is as follows: after the development of a real-time interaction system is completed, the input and output of each system are determined, and a large number of input and output data sequences may be obtained during the development and operation of the real-time interaction system.

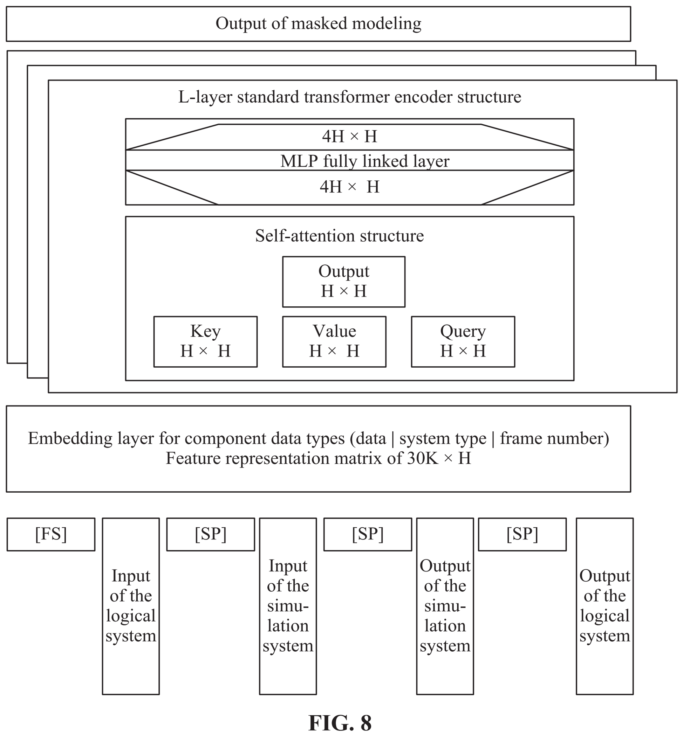

In an embodiment, as shown in FIG. 8, the training manner of the pre-trained model is shown. One frame of the real-time interaction system contains 4 types of data: input from the user-generated logical system, input from the logical system to the simulation system, output of the simulation system, and output from the logical system to the rendering system after updating the simulation result. FIG. 8 shows a data sequence with [FS] feature symbols as frame separators and [SP] feature symbols as system data separators.

A BERT-like bidirectional transformer structure using Mask Modeling may be used to train a prediction model for a given system input and output. The training steps are as follows.

In S 10, the above frame sequence data is collected, and one of the following three pieces of data is randomly replaced with one special [Mask] symbol with a 15% probability. The following three pieces of data are the input from the logical system to the simulation system, the output of the simulation system, and the output from the logical system to the rendering system after updating the simulation result.

In S20, the data from the step S10 as an output sequence is output to an embedding layer of a 30000 × H (256) data component to output feature encoding.

In S30, the feature encoding from the step S20 is made to pass through a standard transformer structure with H = 256 and L = 8, to expect the resulting output to predict data replaced by the [Mask] special symbol through the feature encoding.

The trained model is used in scenarios where the logical system or the simulation system cannot complete the computing task at the specified frame rate. Specifically, the data sequence composed of data from other systems that can complete computations and data from systems that cannot complete computations and is replaced by [Mask] is input into the prediction model to predict the output of the system. Additional computing power is used, so that the performance stability of the entire system is significantly improved.

The logical node in the distributed node is configured to run the main logic code of real-time interactive content, and are mainly responsible for responding to external inputs of the entire system (such as, user inputs or other sensor signals), a computing and rendering task is generated, the computing and rendering task is scheduled, a computing task result is received, and a logical state of the virtual world is maintained.

The computing node in the distributed node is configured to run a system that performs the computing task, such as a cloth simulation system, an animation simulation system, and relatively time-consuming general task systems. The computing node is configured to receive a computing task sent by the logical node and return a result to the logical node after performing a local computation. The computing node is a stateless node, enabling quick replacement.

The stateless node in the cloud native distributed real-time rendering framework of the present application only receives the task and returns the result, without storing any content state or having contextual relationships. If the stateless node malfunctions, it may be replaced quickly with another node. This architecture ensures high availability in distributed rendering and computing.

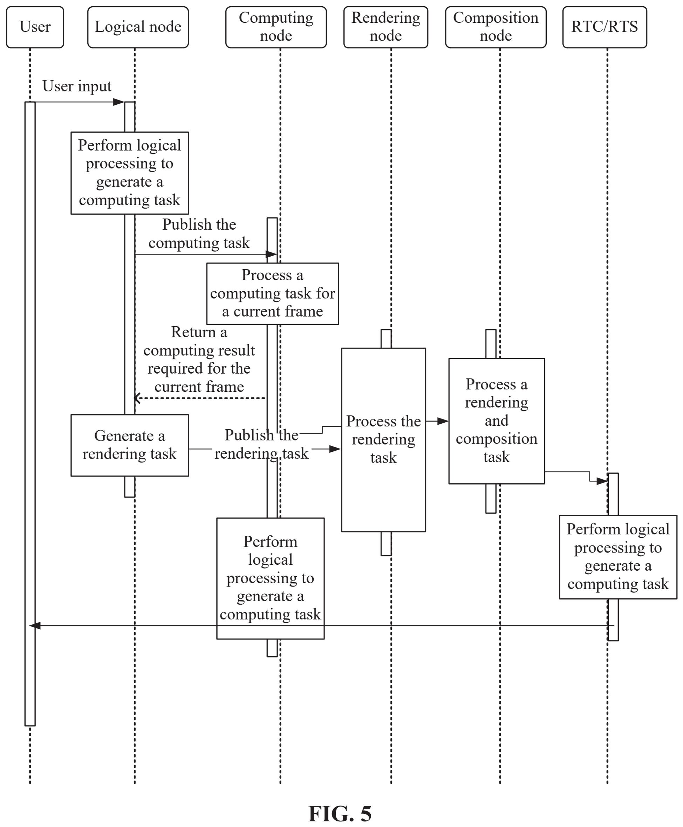

FIG. 5 is a timing diagram showing the system running of a cloud native distributed real-time rendering framework according to an embodiment of the present application. Through the distributed architecture, modules may be split as needed to the greatest extent, allowing specialized nodes to be responsible for specialized tasks and dispersing performance bottlenecks. Unlike traditional cloud content, it avoids the situation where computing time and rendering time are superimposed.

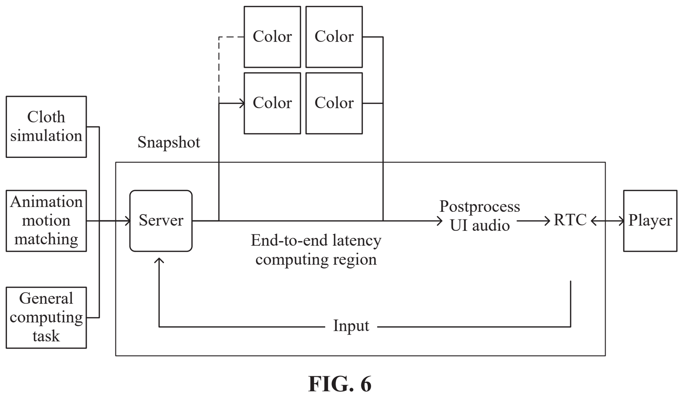

FIG. 6 is a schematic diagram of an overall system delay of a cloud native distributed real-time rendering framework according to an embodiment of the present application. The logical node (service module) is configured to be responsible for responding to a user operation and generating a computing and rendering task. The rendering node is configured to be responsible for processing a rendering task that cannot be processed by a single machine, with its computational load split into 1/N parts. The composition node (Postprocess) is configured to be responsible for image composition.

Total rendering time = game node time + maximum time of a single rendering (computing) node + composition node time. This improved rendering architecture provides technical support for low latency.

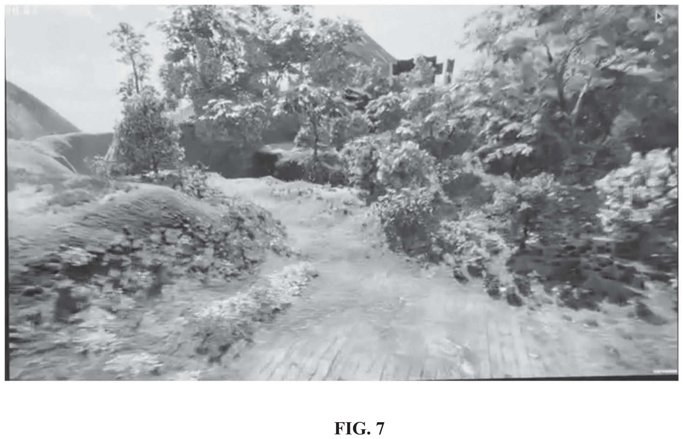

FIG. 7 is a diagram showing a test scenario of a real-machine project that applies a cloud native distributed real-time rendering framework according to an embodiment of the present application. It shows the real-machine test data in a cloud network environment using a scene with approximately 10 billion triangular faces in total, while the average number of faces in the viewing angle is about 200 million. The comparative test results are shown in the following table:

| | Single NV3060 rendering node | Dual NV3060 rendering nodes | Quad NV3060 rendering nodes |
|---|---|---|---|
| Frame Rate (FPS) | 35-55 | 60-80 | 70-100 |

As can be seen from the test data, in a scenario of such complexity, a single 3060 GPU is no longer capable of providing a smooth 60 FPS interactive experience for interactive experience. However, through the distributed rendering technology, two 3060 rendering nodes can still deliver a stutter-free interactive experience with over 60 FPS for the user. Four 3060 rendering nodes may support higher frame rates. When combined with the frame rate limiting mode commonly used in rendering engines (which limits the overall system frame rate to 60 FPS), the frame rate may be extremely stable with redundant computing power. Nevertheless, the experimental environment aims to test the upper limit of rendering performance, so the frame rate limiting mode of the rendering engine was disabled during the test.

Therefore, the cloud native distributed real-time rendering framework of the present application can provide a cloud native distributed framework suitable for an interactive real-time 3D rendering task. It also adapts Unity-a widely used real-time 3D rendering engine in the industry-to this framework. The real project experimental data proves that the framework can indeed schedule computing power from multiple nodes to complete rendering and computing power tasks generated by the Unity engine, breaking through computing power limits to achieve better overall system performance.

Corresponding to the embodiments of the cloud native distributed real-time rendering framework of the present application, another aspect of the present application further provides a cloud native distributed real-time rendering method. To address the problems proposed in the present application, this method is based on a computer program processing flow. It implements a solution for controlling or processing external or internal computer objects by executing a computer program compiled according to the flow. The cloud native distributed real-time rendering method includes the following steps: in response to an input operation of a user, a logical node performs logical processing to generate a computing task; the computing task is published to a computing node, and the computing node processes a computing task for a current frame; a computing result required for the current frame is returned to the logical node so as to generate a rendering task; the rendering task is published, and a rendering node processes the rendering task; a composition node processes a rendering and composition task; and streaming of a rendered image is performed, so that the user receives a streamed image.

The cloud native distributed real-time rendering method further includes that: the computing node processes an asynchronous computing task.

The cloud native distributed real-time rendering method further includes that: input and output data of multiple types of nodes are synchronized according to a computing task rule and a frame rate. The computing task rule is divided into an asynchronous update mode or a frame rate update mode.

The cloud native distributed real-time rendering method further includes steps for processing by the data transmission module: the component data of the corresponding entity in ECS is acquired and is sent directly through the transmission layer; rendering result data from the rendering node is acquired and is encoded using hardware-supported codec functions before being sending through the transmission layer, and a receiving end performs hardware decoding; and a serialized data block is acquired and is sent directly through the transmission layer.

The cloud native distributed real-time rendering method further includes steps for optimizing the network environment of cloud data center rooms: link modes such as a TCP mode, a UDP mode, or an RDMA mode are provided for selection by an upper layer according to data characteristics between different systems and reachability requirements between systems. The UDP link is used between the computing node and the logical node, the TCP link is used between the logical node and the rendering node, and the TCP link is used between the rendering node and the composition node.

The cloud native distributed real-time rendering method further includes that: when a rendering task that cannot be completed by a single node is detected, the logical node splits the rendering task and distributes the split rendering tasks to multiple rendering nodes, so that the multiple rendering nodes can jointly complete the split rendering task in a manner of collaborative rendering.

The cloud native distributed real-time rendering method further includes that: for the coordination of rendering nodes within a group, when the fluctuation of the rendering nodes within the group is significant, a suitable target update frequency for the group is calculated by comprehensively considering actual update frequencies and historical data of multiple nodes within the group; for the rendering node and the server, a network sending frequency of data states from the service module node to the group is dynamically adjusted based on the target frequency calculated for each group; and for the calculation of a dynamic sending frequency, it is calculated based on the target frequency of the group and a frequency parameter of the server itself to determine whether to send the data state for the group in the current frame.

The cloud native distributed real-time rendering method further includes that: spatial dimension splitting is performed, and temporal dimension splitting is performed. In the step of performing the spatial dimension splitting, the tile-based splitting manner is used in combination with a rendering pipeline of a GPU-driven rendering task. In the step of performing the temporal dimension splitting, the rendering task generated by the logical node sends dotting data representing the world change amount at the update frequency of the logical frame rate of the virtual world, thereby allowing the rendering node and the logical node to operate at different frame rates. A prediction model for processing logical result dotting sequence data is integrated into the rendering node.

The cloud native distributed real-time rendering method further includes that: a logical frame prediction model is provided as a pre-trained model trained for a specific virtual world state, the model is trained by using a Mask Modeling manner, and an end-to-end training is provided for a logical data structure of each virtual world. The training steps of the pre-trained model include that: after the development of a real-time interaction system is completed, the input and output of each system are determined, and a large number of input and output data sequences may be obtained during the development and operation of the real-time interaction system; and a prediction model for input and output of a given system is trained by using a Bert-like bidirectional transformer structure in the Mask Modeling manner.

The cloud native distributed real-time rendering method further includes that: input data of the logical system generated by the user is acquired; input data of the simulation system generated by the logical system is acquired, output data of the simulation system is acquired, and output data from the logical system to the rendering system after updating the simulation results is acquired; and an "FS" feature symbol is assigned as a frame separator, and an "SP" feature symbol is assigned as a data sequence of a system data separator.

The cloud native distributed real-time rendering method further includes steps for training the prediction model: frame sequence data is acquired, and one of the following three pieces of data is randomly replaced with one special "Mask" symbol with a 15% probability, where the following three pieces of data are the input from the logical system to the simulation system, the output of the simulation system, and the output from the logical system to the rendering system after updating the simulation result; the data from the foregoing steps is acquired as an output sequence and the output sequence is output to an embedding layer of a 30000 × H data component to output feature encoding; and the feature encoding from the previous step is made to pass through a standard transformer structure with H = 256 and L = 8, to expect the resulting output to predict data replaced by the "Mask" special symbol through the feature encoding.

The cloud native distributed real-time rendering method further includes that: the trained model is used in scenarios where the logical system or the simulation system cannot complete the computing task at the specified frame rate, and the data sequence composed of data from other systems that can complete computations and data from systems that cannot complete computations and replaced by "Mask" is input into the prediction model to predict the output of the system.

It is to be understood by those skilled in the art that the embodiments of the present application may be provided in the form of a method, a system, or a computer program product. Therefore, the present application may take the form of an entirely hardware embodiment, an entirely software embodiment, or an embodiment combining software and hardware. The method of the present application may be implemented by hardware, software, or a combination of software and hardware. The present application may be implemented in a centralized manner in at least one computer system, or in a distributed manner by different parts distributed across several interconnected computer systems. Any computer system or other device capable of implementing the method is applicable. The combination of commonly used software and hardware may be a general-purpose computer system mounted with a computer program. The computer system is controlled by mounting and executing the program to operate in accordance with the method.

The present application may be embodied in a computer program product that includes all features enabling the implementation of the methods described herein. The computer program product is contained in one or more computer-readable storage media having a computer-readable program code embodied therein. According to another aspect of the present application, a computer-readable storage medium storing a computer program is also provided. The computer program, when executed by a processor, is capable of performing the steps of the method of the present application. A computer storage medium is a medium in a computer memory for storing a discrete physical quantity. The computer storage medium includes, but is not limited to, semiconductors, disk storage devices, magnetic cores, magnetic drums, magnetic tapes, optical disks, non-transitory storage media, and the like. The computer storage medium is not limited to the foregoing examples, which are merely illustrative.

According to another aspect of the present application, a cloud native distributed real-time rendering device is also provided. The device includes a software application, a memory configured to store the software application, and a processor configured to execute the software application. The program of the software application is capable of correspondingly performing the steps in the cloud native distributed real-time rendering method of the present application.

Corresponding to the embodiments of the cloud native distributed real-time rendering framework and method of the present application, according to another aspect of the present application, a cloud native distributed real-time rendering system is also provided. The cloud native distributed real-time rendering system includes a logical node service module, a computing node service module, a rendering node processing module, a composition node service module, and an RTC or RTS service module.

The logical node service module is configured to perform logical processing to generate a computing task in response to an input operation of a user and publish the computing task to the computing node service module. The computing node service module is configured to perform a computing task, process a computing task for a current frame and an asynchronous computing task, and return a computing result required for the current frame to the logical node service module after processing the computing task for the current frame. The logical node service module is further configured to generate a rendering task and publish the rendering task to the rendering node processing module. The rendering node processing module is configured to process a rendering task. The composition node service module is configured to process a rendering and composition task to perform a composition of an image. The RTC or RTS service module is configured to perform streaming of a rendered image, so that the user receives a streamed image.

The logical node service module is configured to run the main logic code of real-time interactive content, and generate, in response to user input operations from outside the system or sensor signals, a computing and rendering task, schedule the computing and rendering task, receive a computing task result, and maintain a logical state of the virtual world. The cloud native distributed real-time rendering system provides temporal dimension splitting, and the rendering task generated by the logical node service module sends dotting data representing the world change amount at the update frequency of the logical frame rate of the virtual world.

The computing node service module is a stateless node, enabling quick replacement.

A TCP link is used between the logical node service module and the rendering node processing module. A UDP link is used between the computing node service module and the logical node service module, and a TCP link is used between the rendering node processing module and the composition node service module.

When the cloud native distributed real-time rendering system of the present application processes a rendering task that cannot be completed by a single node, the logical node service module splits the rendering task to multiple rendering node processing modules so as to distribute the computational load, which is jointly completed in a manner of collaborative rendering. Total rendering time = game node time + maximum time of a single rendering (computing) node + composition node time. This manner provides a technical guarantee for low latency.

In the cloud native distributed real-time rendering system of the present application, the rendering node processing module and the logical node service module operate at different frame rates. A prediction model for processing the logical result dotting sequence data of the logical node service module is incorporated into the rendering node processing module, thereby enabling higher and more stable frame rates with more GPU computing power.

The stateless node in the cloud native distributed real-time rendering system of the present application only receives the task and returns the result, without storing any content state or having contextual relationships. If the stateless node malfunctions, it may be replaced quickly with another node, thereby ensuring high availability in distributed rendering and computing. The cloud native distributed real-time rendering system of the present application may split modules as needed, thereby allowing specialized nodes to be responsible for specialized tasks and disperse performance bottlenecks. Unlike traditional cloud content, it avoids the superposition of computing time and rendering time.

The cloud native distributed real-time rendering system further includes a data transmission service module. The data transmission service module is configured to: process and send the component data of the corresponding entity in ECS, rendering result data from the rendering node, and a serialized data block. The data transmission service module is configured to use a deep learning model with a BERT structure as a backup module when performance jitter occurs in a system module, so that the stability of system performance is enhanced.

Multiple embodiments of the cloud native distributed real-time rendering framework and method of the present application are applicable to the cloud native distributed real-time rendering system of the present application.

The present application provides a cloud native distributed real-time rendering framework, a cloud native distributed real-time rendering method, and a cloud native distributed real-time rendering device, which can use a computing framework with cloud-side elastic scaling computing power and schedule a computing power task to complete the computing task by using multiple computing instances.

The present application provides the cloud native distributed real-time rendering framework, the cloud native distributed real-time rendering method, and the cloud native distributed real-time rendering device, which can perform real-time streaming processing on unstructured data that needs to be processed in the real-time 3D field, such as meshes, animations, special effects, lighting, scenes, and the like.

The present application provides a cloud native distributed real-time rendering framework, a cloud native distributed real-time rendering method, and a cloud native distributed real-time rendering device, which can process a data structure handled by a real-time rendering engine.

The present application provides a cloud native distributed real-time rendering framework, a cloud native distributed real-time rendering method, and a cloud native distributed real-time rendering device, which can provide interactive real-time rendering tasks. What is processed includes not only rendering problems but also business logic, user input, interactive component logic in the virtual world, animation systems, physical simulation systems, and the like.

The present application has been described with reference to flowcharts and/or block diagrams of methods, systems, and computer program products according to the present application. It is evident that each block in the flowcharts and/or block diagrams, as well as combinations of blocks in the flowcharts and/or block diagrams, may be implemented by computer program instructions. These computer program instructions may be provided to a processor of a general-purpose computer, a special-purpose computer, an embedded processor, or other programmable data processing devices to produce a machine, so that the instructions (executed by the processor of the computer or other programmable data processing devices) generate an apparatus for implementing the functions specified in one or more blocks of the flowcharts and/or block diagrams.

## Claims

1. A cloud native distributed real-time rendering framework for processing real-time streaming unstructured data, comprising: a network topology link establishment module, a traditional interactive real-time three-dimensional, 3D, framework adaptation layer, an entity-component system, ECS, based distributed development framework, a network synchronization layer, a data transmission layer, and a network transmission layer, wherein,
the cloud native distributed real-time rendering framework is configured to provide a plurality of types of distributed nodes, and the plurality of types of distributed nodes comprise a composition node, a rendering node, a logical node, and a computing node;
a plurality of domains of the traditional interactive real-time 3D framework adaptation layer are split into a plurality of types of service modules, and each type of service module of the plurality of types of service modules corresponds to one type of distributed node among the plurality of types of distributed nodes;
the network topology link establishment module is configured to establish, according to a data processing flow and differences in data transmission types of the plurality of types of distributed nodes, a transmission control protocol, TCP, link, a user data packet protocol, UDP, link, or a remote direct memory access, RDMA, link for the plurality of types of distributed nodes;
the ECS-based distributed development framework is configured to be compatible with a development system to automatically complete data synchronization;
the network synchronization layer is configured to synchronize, according to a computing task rule and a frame rate, input and output data of the plurality of types of distributed nodes of the cloud native distributed real-time rendering framework;
the data transmission layer is configured to provide a sending and receiving service for a plurality of types of data packets;
the network transmission layer is configured to encapsulate, according to data characteristics between different systems and reachability requirements between systems, a TCP link mode, a UDP link mode, or an RDMA link mode for selection by the network topology link establishment module of an upper layer;
the ECS-based distributed development framework is further configured to provide a business logic development framework, and the traditional interactive real-time 3D framework adaptation layer in parallel with the ECS-based distributed development framework is further configured to provide an adaptation capability of a Unity functional module on the ECS-based distributed development framework; and
wherein, in a case where a rendering task that cannot be completed by a single rendering node is processed, the logical node splits the rendering task and assigns split rendering tasks to a plurality of rendering nodes, so that the plurality of rendering nodes jointly complete the split rendering tasks in a manner of collaborative rendering.

2. The cloud native distributed real-time rendering framework of claim 1, wherein for a coordination of rendering nodes within a group, in a case where rendering time per frame of the rendering nodes within the group is greater than a preset threshold, a target update frequency within the group is calculated according to actual update frequencies of a plurality of nodes within the group and historical data of the plurality of nodes within the group.

3. The cloud native distributed real-time rendering framework of claim 1, wherein for the rendering node and a server, a network sending frequency of a data state for each group by a server node is dynamically adjusted according to target frequencies calculated for different groups.

4. The cloud native distributed real-time rendering framework of claim 1, wherein for a calculation of a dynamic sending frequency, whether to transmit a data state for a group in a current frame is determined according to a target frequency of the group and a calculation of a frequency parameter of a server itself.

5. The cloud native distributed real-time rendering framework of claim 1, wherein a rendering task splitting manner comprises at least one of spatial dimension splitting or temporal dimension splitting.

6. The cloud native distributed real-time rendering framework of claim 5, wherein the spatial dimension splitting supports a tile-base manner to split the rendering task based on a dimension of a final image, and the spatial dimension splitting changes a configuration by changing the complexity of the rendering task.

7. The cloud native distributed real-time rendering framework of claim 5, wherein for the temporal dimension splitting in a distributed real-time rendering system, the rendering task generated by the logical node transmits dotting data expressing an amount of world change at an update frequency of a logical frame rate of a virtual world, and a current architecture design allows the rendering node and the logical node to run at different frame rates.

8. The cloud native distributed real-time rendering framework of claim 1, wherein in the cloud native distributed real-time rendering framework, a prediction model for processing logic result dotting sequence data is added to the rendering node.

9. The cloud native distributed real-time rendering framework of claim 1, wherein the logical node in the plurality of types of distributed nodes is configured to run logical code of a real-time interactive content, respond to an external input of an entire system, generate a computing and rendering task, schedule the computing and rendering task, receive a computing task result, and maintain a logical state of a virtual world.

10. The cloud native distributed real-time rendering framework of claim 1, wherein the computing node in the plurality of types of distributed node is configured to run a system for executing a computing task, receive a computing task sent by the logical node, and return a result to the logical node after performing local computation.

11. The cloud native distributed real-time rendering framework of claim 1, wherein the computing node is a stateless node, the stateless node only receives a task and returns a result without storing a state of a content and maintaining a context relationship, and in a case where the stateless node fails, the stateless node is replaced by other nodes.

12. The cloud native distributed real-time rendering framework of claim 1, wherein the logical node is configured to respond to a user operation and generate a computing and rendering task; the rendering node is configured to process a rendering task that cannot be processed by a single machine, with a computational load split; and the composition node is configured to perform image composition, wherein total rendering time is a sum of time of a game node, a maximum time of a single rendering computing node, and time of the composition node.

13. The cloud native distributed real-time rendering framework of any one of claims 1 to 12, wherein the data transmission layer comprises an ECS data transmission module, a rendering data transmission module, and other data transmission modules, the ECS data transmission module is configured to process entity component data of an ECS, the rendering data transmission module is configured to process rendering result data of the rendering node, and the other data transmission modules are configured to process serialized data blocks of other data structures, and in a case where performance fluctuation occurs, the data transmission module uses a deep learning model with a BERT structure as a backup module.

14. The cloud native distributed real-time rendering framework of any one of claims 1 to 12, wherein the computing task rule in the network synchronization layer is divided into an asynchronous update mode or a frame rate update mode.

15. A cloud native distributed real-time rendering method, comprising:
in response to an input operation of a user, performing, by a logical node, logical processing to generate a computing task;
publishing the computing task to a computing node, and processing, by the computing node, a computing task for a current frame;
returning a computing result required for the current frame to the logical node so as to generate a rendering task;
publishing the rendering task, and processing, by a rendering node, the rendering task;
processing, by a composition node, a rendering and composition task; and
performing streaming of a rendered image, so that the user receives a streamed image.

16. The cloud native distributed real-time rendering method of claim 15, further comprising:
providing a logical frame prediction model as a pre-trained model trained for a specific virtual world state, and performing an end-to-end training for a logical data structure of each virtual world.

17. The cloud native distributed real-time rendering method of claim 16, wherein training of the pre-trained model comprises:
after a development of a real-time interactive system is completed, determining an input and output of each system, and obtaining an input and output data sequence during the development and operation of the real-time interactive system.

18. The cloud native distributed real-time rendering method of claim 16, further comprising training of a prediction model, wherein the training of the prediction model comprises:
acquiring frame sequence data, and randomly replacing one of the following three pieces of data with one special symbol: an input of a simulation system generated by a logical system, an output of the simulation system, and an output of a logical system to a rendering system after updating a simulation result;
acquiring replaced data as an output sequence and transmitting the output sequence to an embedding layer of one data component, and encoding an output feature; and
acquiring an encoded feature and passing the encoded feature through one standard transformer structure, and expecting that an obtained output is capable of predicting the data replaced by the special symbol through feature encoding.

19. The cloud native distributed real-time rendering method of claim 18, further comprising:
after the model is trained, in a case where the logical system or the simulation system fails to complete the computing task at a specified frame rate, inputting a data sequence comprising data from other systems that is capable of completing a computing and data from a system that is not capable of completing the computing and replaced by the special symbol into the prediction model to predict the output of the system.

20. The cloud native distributed real-time rendering method of any one of claims 15 to 19, wherein the cloud native distributed real-time rendering method is performed by the cloud native distributed real-time rendering framework of any one of claims 1 to 14.

21. A cloud native distributed real-time rendering device, comprising:
a memory, configured to store a software application; and
a processor, configured to execute the software application, and a program portion of the software application correspondingly performs the cloud native distributed real-time rendering method of any one of claims 15 to 19.

22. A computer-readable storage medium, storing a computer program, wherein the computer program, when executed by a processor, performs the cloud native distributed real-time rendering method of any one of claims 15 to 19.

23. A cloud native distributed real-time rendering system, comprising a logical node service module, a computing node service module, a rendering node processing module, a composition node service module, and a real-time communication, RTC, or real-time system, RTS, service module, wherein the logical node service module is configured to perform logical processing to generate a computing task in response to an input operation of a user and publish the computing task to the computing node service module, the computing node service module is configured to perform a computing task, process a computing task for a current frame and an asynchronous computing task, and return a computing result required for the current frame to the logical node service module after processing the computing task for the current frame, the logical node service module is further configured to generate a rendering task and publish the rendering task to the rendering node processing module, the rendering node processing module is configured to process a rendering task, the composition node service module is configured to process a rendering and composition task to perform a composition of an image, and the RTC or RTS service module is configured to perform streaming of a rendered image, so that the user receives a streamed image.

24. The cloud native distributed real-time rendering system of claim 23, wherein, in a case where a rendering task that cannot be completed by a single node is processed, the rendering task is split by the logical node service module, and a split rendering task is allocated to a plurality of rendering node processing modules to split a computational load, so that the plurality of rendering node processing modules is capable of jointly completing the split rendering task in a manner of collaborative rendering by splitting the computational load

25. The cloud native distributed real-time rendering system of claim 23 or 24, wherein the computing node service module is a stateless node.
